# FASCICULE DE BREVET EUROPEEN

(11) **EP 2 085 277 B1**
(45) Date de publication et mention de la délivrance du brevet: **18.08.2010**
(21) Numéro de dépôt: 09151032.1
(22) Date de dépôt: 21.01.2009
(51) Int. Cl.: B60T 13/57

(54) **Servomoteur d'assistance au freinage d'actionnement rapide**
Bremskraftverstärker zur Schnellauslösung der Bremse
Brake booster for quick-action braking assistance

(30) Priorité: 25.01.2008 FR 0800417
(43) Date de publication de la demande: 05.08.2009
(73) Titulaire: Robert Bosch GmbH, 70442 Stuttgart (DE)
(72) Inventeur: Anderson, Chris, 75002 Paris (FR); Sprocq, Raynald, 77450 Esbly (FR); Attard, Jean-Marc, 60340 Villers sous St Leu (FR); Michon, Jean-Pierre, 77178 Saint Pathus (FR)
(74) Mandataire: Hurwic, Aleksander Wiktor

(56) Documents cités:
- WO-A-2004/026653
- FR-A- 2 782 044
- FR-A- 2 856 363

## Description

L'invention concerne servomoteur d'assistance au freinage et plus particulièrement un servomoteur d'assistance au freinage d'actionnement rapide applicable notamment dans un véhicule automobile.

Dans les systèmes de freinage automobile, il existe généralement une course morte perceptible au début d'un freinage lors de l'actionnement de la pédale de frein durant laquelle le conducteur appuie sur la pédale de frein sans qu'une pression hydraulique soit induite de façon efficace dans le circuit de freinage du véhicule.

Il existe des systèmes permettant de réduire cette course morte. C'est le cas, par exemple du système décrit dans la demande de brevet français n° FR2856363.

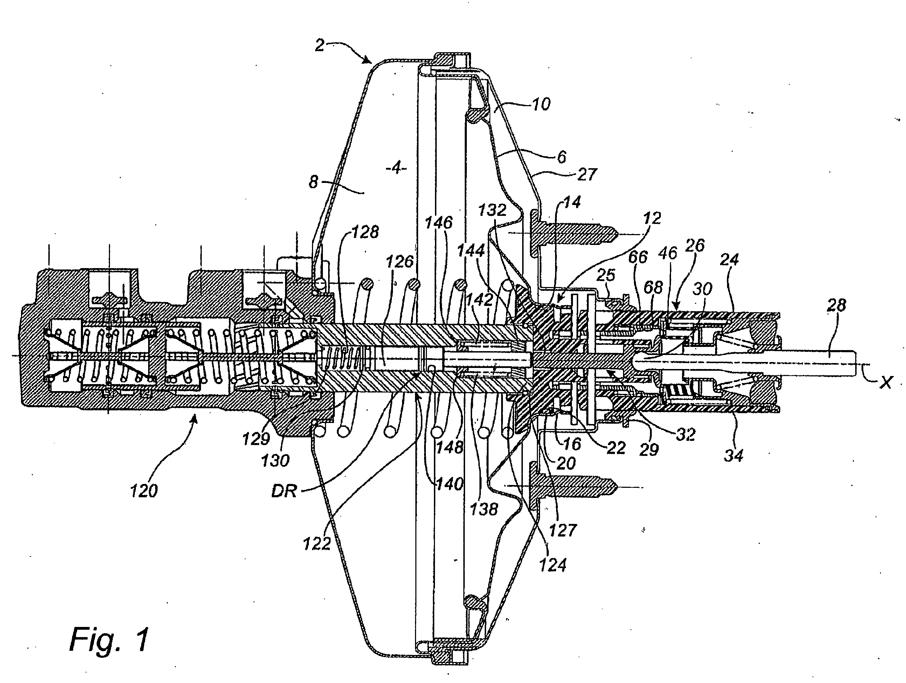

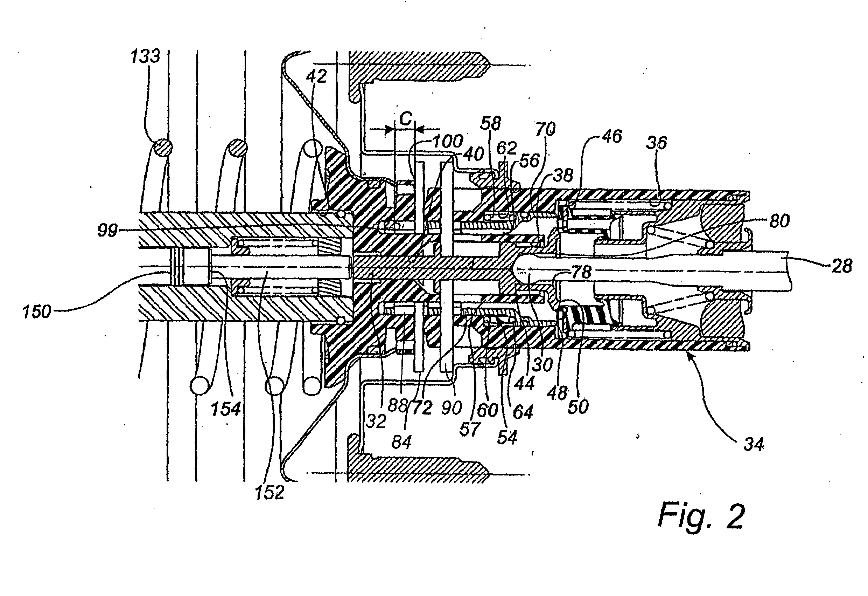

Ce système comporte, comme cela est représenté en figures 1 et 2:
- un boîtier 2, d'axe longitudinal X, contenant une jupe 6 montée à coulissement axial étanche dans le boîtier et délimitant une première chambre 8 à basse pression appelée chambre avant et une deuxième chambre 10 à pression variable appelée chambre arrière,
- un piston 12 solidaire de la jupe 6,
- une vanne trois voies 26 permettant, sous la commande d'une tige de commande 28, d'isoler l'une de l'autre les chambres avant et arrière, de les mettre en communication entre elles ou de mettre la chambre arrière à une pression élevée par rapport à la basse pression telle que la pression atmosphérique,
- une douille 54 coulissant axialement à l'intérieur du piston 12, une face annulaire 48 de cette

douille tenant lieu de premier siège de clapet, appelé siège d'équilibrage, pour la vanne trois voies 26,
- un distributeur-plongeur 32 possédant une face annulaire 50 tenant lieu de deuxième siège de clapet, appelé siège de clapet d'admission, pour la vanne trois voies 26,
- une première clé 84 traversant perpendiculairement à l'axe X deux ouvertures diamétralement opposées 86 du piston et deux lumières diamétralement opposées 88 de la douille 54. La clé 84 est montée fixe dans le piston pneumatique 12
- une deuxième clé 90 traversant perpendiculairement à l'axe X, le piston et la douille 54, cette deuxième clé formant butée axiale de retour pour le distributeur-plongeur 32.

Le fonctionnement d'un tel servomoteur est le suivant:
En position de repos (figures 1 et 2), le clapet 46 est décollé du premier siège de clapet ou clapet d'équilibrage 48 (porté par la douille 54) et met en communication la chambre avant 8 avec la chambre arrière 10. Le clapet 46 est en appui sur le deuxième siège de clapet d'admission 50 isolant ainsi la chambre arrière de la pression atmosphérique.

Au début d'une phase de freinage, lorsque le conducteur appuie sur la pédale de frein, la tige de commande 28 est déplacée axialement vers l'avant, le clapet 46 vient alors en application sur le premier siège de clapet 48 isolant la chambre arrière de la chambre avant et se décolle du deuxième siège 50 et autorisant une alimentation en air à pression atmosphérique dans la chambre arrière. Du fait de la différence de pressions entre la chambre avant et la chambre arrière, la jupe 6 et le piston 12 sont déplacés vers l'avant. Le premier siège de clapet 48 porté par la douille 54 est immobile tant que le jeu C entre la clé 84 et l'extrémité avant des deuxièmes lumières 88 n'est pas rattrapé.

Le ressort 58 maintient la douille 54 dans une position axiale déterminée par rapport au boîtier du servomoteur tant que le piston 12 n'a pas parcouru une course déterminée C. Le piston hydraulique du maître-cylindre est poussé par le piston pneumatique, qui emporte lui-même le piston auxiliaire 126 qui s'éloigne du palpeur. Au delà d'une pression déterminée dans le maître-cylindre suffisante pour que le piston auxiliaire 126 puisse vaincre le ressort de saut 138, le piston auxiliaire est repoussé en direction du palpeur jusqu'à venir en contact avec celui-ci et retransmet alors la réaction du circuit hydraulique à la pédale de frein.

Lorsque le piston pneumatique 12 a parcouru la course C (voir figure 2), la face avant 100 de la clé 84 fixe par rapport au piston pneumatique vient en appui de l'extrémité avant des lumières 88 de la douille. La douille est alors liée axialement au déplacement du piston. Le clapet 46 vient en contact du siège de clapet d'admission 50 et interrompt l'alimentation en air à pression atmosphérique de la chambre arrière. Le conducteur doit alors enfoncer davantage la pédale de frein pour augmenter le niveau de freinage.

La course C est choisie préférentiellement de manière à ce qu'elle corresponde à la course morte du maître-cylindre, c'est-à-dire à la course nécessaire du piston hydraulique dans le maître-cylindre pour obtenir le début de la montée en pression du liquide de frein dans les freins. Par conséquent, le conducteur ne ressent à la pédale que la course nécessaire à la fermeture du clapet d'équilibrage et à l'ouverture du clapet d'admission et ne ressent pas la course morte du maître-cylindre. Le confort du conducteur est alors augmenté, puisqu'il a la sensation d'un freinage immédiat.

Ensuite, le système entre dans la phase de freinage proprement dite. Un équilibre est atteint lorsque le conducteur maintient le freinage à un niveau déterminé. Le clapet 46 est alors en contact avec le siège d'équilibrage 48 et le siège d'admission 50, interrompant l'alimentation en air à pression atmosphérique de la chambre arrière.

Le servomoteur arrive ensuite en phase de saturation qui correspond au moment où le servomoteur ne fournit plus d'assistance supplémentaire, la pression régnant dans la chambre arrière est la pression atmosphérique. Le piston pneumatique ne peut plus avancer axialement sous l'action du déplacement de la jupe 6. Par conséquent la douille 54 et le siège de clapet d'équilibrage 48 sont immobiles. Tout effort de freinage supplémentaire fourni par le conducteur déplace la tige de commande 28 et le siège d'admission en éloignement du clapet 46, cependant cet effort supplémentaire n'est plus amplifié. L'augmentation de pression dans le maître-cylindre est égale à l'effort supplémentaire fourni par le conducteur par la section du piston du maître-cylindre.

A la fin du freinage, le conducteur relâche la pédale de frein au moins en partie. Le distributeur-plongeur est alors entraîné avec la tige de commande vers l'arrière. Le siège de clapet d'admission 50 vient en contact du clapet 46 pour interrompre l'alimentation en air à pression atmosphérique de la chambre arrière et emporte le clapet 46 en éloignement du siège d'équilibrage 48, mettant en communication la chambre avant 8 et la chambre arrière 10. Les pressions s'équilibrent alors de part et d'autre de la jupe 6 qui revient en position repos sous l'action du ressort de rappel. La position de repos du piston pneumatique 12 est fixée par la deuxième clé 90 en appui contre la portée annulaire 119 de l'enveloppe 2. Le distributeur-plongeur retourne également au repos en venant en butée contre la clé 90. La course C située entre l'extrémité avant de la lumière 88 et la face avant 100 de la clé 84 est rétablie par l'action du ressort 58 de rappel de la douille. Le servomoteur est alors à nouveau en position pour fonctionner avec une course minimale d'actionnement.

Dans un tel système, on constate la nécessité d'un pic d'effort à appliquer à la pédale lorsque la clé 84 a parcouru la course C et qu'elle entre en contact avec l'extrémité avant des lumières 88 de la douille 54. L'objet de l'invention est d'atténuer cette transition qui est perceptible à la pédale de frein.

L'invention concerne donc un servomoteur d'assistance au freinage qui comporte:
- un boîtier possédant un axe longitudinal déterminé,
- un ensemble jupe et piston pneumatique monté à coulissement étanche dans le boîtier selon l'axe longitudinal, ledit ensemble jupe et piston divisant l'espace intérieur du boîtier en une chambre avant à basse pression et en une chambre arrière à pression variable,
- une vanne trois voies actionnée par une tige de commande montée dans un passage longitudinal percé dans le piston pneumatique, ladite tige de commande étant reliée par une première extrémité longitudinale à une pédale de frein,
- un distributeur-plongeur mobile, dans ledit piston, selon ledit axe longitudinal sous la commande d'une deuxième extrémité de ladite tige de commande, ledit distributeur-plongeur comportant un palpeur d'application de l'effort de la tige de commande à un piston hydraulique d'un maître-cylindre par l'intermédiaire d'un dispositif de réaction, ledit ensemble jupe et piston transmettant un effort d'assistance pneumatique au piston hydraulique du maître-cylindre,
- une douille montée à coulissement étanche dans le piston pneumatique selon ledit axe longitudinal sur une première course déterminée,
- un moyen de solidarisation apte à lier axialement ladite douille au piston pneumatique lorsque ledit piston pneumatique a parcouru la course déterminée.

La vanne trois voies comporte un premier et un deuxième sièges de clapet, et un clapet destiné à être appliqué contre le premier et/ou le deuxième siège de clapet. Le deuxième siège de clapet est porté par une première extrémité longitudinale du distributeur-plongeur. Le premier siège de clapet est porté par une première extrémité longitudinale de ladite douille.

Selon l'invention, le moyen de solidarisation comporte un dispositif de déplacement progressif de la douille en fonction du déplacement du piston.

Préférentiellement, le dispositif de déplacement progressif comporte une face inclinée par rapport audit axe longitudinal et est destinée à transmettre à ladite douille, un effort de déplacement selon l'axe longitudinal fourni par le piston.

Selon une forme de réalisation de l'invention, ladite face inclinée appartient à une face avant d'une clé. Cette clé possède une première extrémité qui s'appuie sur une pièce solidaire du piston ou sur le piston lui-même, et une deuxième extrémité qui s'appuie sur le boîtier du servomoteur ou sur une pièce qui est elle-même en appui sur le boîtier du servomoteur.

Dans cette forme de réalisation, la première extrémité ou la deuxième extrémité de la clé est fixée par une articulation à la pièce sur laquelle elle est en appui.

On prévoira alors avantageusement que la première extrémité est fixée au piston par ladite articulation et en ce que la deuxième extrémité possède une partie courbée qui prend appui sur le boîtier du servomoteur ou sur une pièce qui est elle-même en appui sur le boîtier du servomoteur.

De préférence, la clé traverse les parois de la douille transversalement audit axe longitudinal par des lumières, la face inclinée de la clé étant destinée à s'appuyer sur des extrémités avant des lumières de la douille.

En situation de freinage, on prévoira avantageusement que la face inclinée de la clé appuie sur les extrémités avant des deux lumières de la douille.

L'invention concerne également une variante de réalisation dans laquelle on prévoit au moins une tige qui traverse orthogonalement audit axe longitudinal les parois de la douille à travers des ouvertures dont une paroi au moins est inclinée par rapport audit axe longitudinal. Des moyens de commande permettent de commander le déplacement longitudinal le long de la paroi inclinée de la tige et de transmettre un mouvement de déplacement axial du piston à la douille par l'intermédiaire de ladite tige.

Selon cette variante de réalisation, ledit moyen de commande comporte une pièce biseautée comportant au moins une face inclinée par rapport audit axe longitudinal dans le même sens que les parois inclinées des ouvertures de la douille.

On prévoira alors avantageusement que les parois inclinées des ouvertures de la douille forment un premier angle (α) avec l'axe longitudinal (X). La face inclinée de la pièce biseautée (79) forme un deuxième angle (β) avec l'axe longitudinal. Dans ce cas, on prévoira que le premier angle (α) est supérieur au deuxième angle (β).

Par ailleurs on pourra également prévoir que le dispositif selon l'invention comporte deux tiges parallèles et symétriques l'une de l'autre par rapport à l'axe longitudinal. La pièce biseautée a alors une forme symétrique par rapport audit axe.

Selon une forme de réalisation de cette variante, les deux tiges sont en une seule pièce et sont reliées entre elles par une jonction ressort.

L'invention concerne également une autre variante de réalisation conforme à l'invention selon laquelle une clé traverse transversalement la douille par des fenêtres. Ces fenêtres comportent une face inclinée par rapport audit axe longitudinal. Cette face inclinée s'appuie sur des extrémités avant desdites fenêtres. Un mouvement axial de ladite clé, commandé par le mouvement du piston, induit alors un mouvement vertical de la clé.

Cette variante de réalisation prévoira alors de préférence, une pièce d'appui comportant une face inclinée sur laquelle une extrémité 81 de la clé prend appui.

Avantageusement, la face inclinée de la pièce d'appui est sensiblement parallèle à la face inclinée de ladite clé.

L'invention concerne également une variante de réalisation supplémentaire dans laquelle la douille comporte une fenêtre inclinée par rapport audit axe longitudinal, ainsi qu'un maneton. Une première extrémité de ce maneton peut se déplacer dans cette fenêtre et une deuxième extrémité peut coulisser dans une cavité du piston.

On prévoira alors que la douille soit mobile en rotation pour permettre le coulissement de la première extrémité du maneton dans la fenêtre.

Les différents objets et caractéristiques de l'invention apparaîtront plus clairement dans la description qui va suivre et dans les figures annexées qui représentent:
- la figure 1, un servomoteur d'assistance au freinage de type connu dans la technique et déjà décrit précédemment,
- la figure 2, une vue plus détaillée du servomoteur d'assistance au freinage de la figure 1 et également décrite précédemment,
- les figures 3 et 4, un exemple de réalisation du dispositif selon l'invention appliqué à un servomoteur pneumatique d'assistance au freinage,
- les figures 5a à 5d, différents états du dispositif de la figure 3 et illustrant son fonctionnement,
- la figure 6, une variante de réalisation du dispositif selon l'invention,
- les figures 7a à 7c, le dispositif de la figure 6 dans différents états illustrant son fonctionnement,
- les figures 8a à 8c, des vues de détails du dispositif de la figures 6,
- les figures 9a à 9c, une variante de réalisation du dispositif selon l'invention,
- les figures 10a et 10b, une autre variante du dispositif selon l'invention.

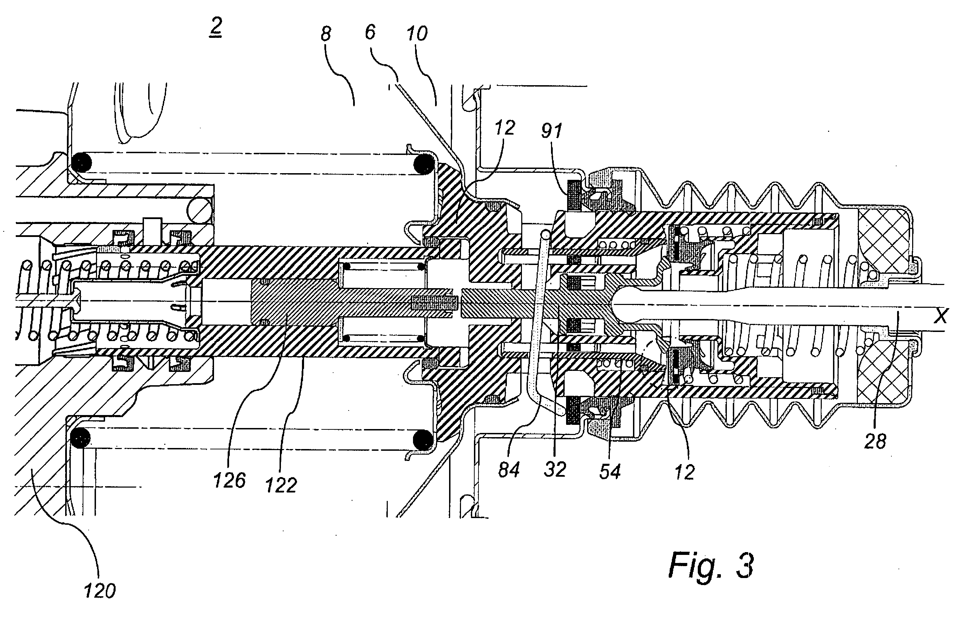

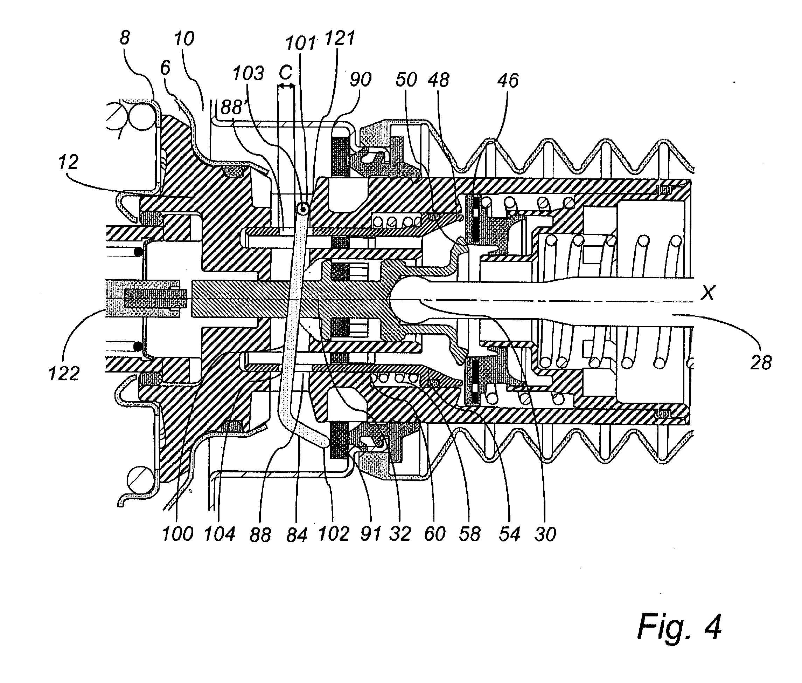

En se reportant aux figures 3 et 4, on va donc décrire un exemple de réalisation du dispositif de l'invention.

Ce dispositif s'applique à un servomoteur d'assistance au freinage tel que celui de la figure 1. Sur ces figures 3, on n'a représenté que la partie du servomoteur contenant le dispositif de l'invention. Les composants représentés sur les figures 3 et 4 portent les mêmes références que les composants des figures 1 et 2 qui assurent les mêmes fonctions.

La description du dispositif des figures 3 et 4 va donc être faite en liaison avec la figure du servomoteur d'assistance au freinage de la figure 1.

Sur la figure 3, on retrouve donc représenté partiellement, le boîtier 2 dans lequel une jupe 6 délimite une chambre avant (basse pression) 8 et une chambre arrière 10 susceptible d'être mise soit à la pression de la chambre avant soit à la pression atmosphérique.

Un piston pneumatique 12 est solidaire de la jupe et coulisse selon l'axe du boîtier 2 du servomoteur.

A l'intérieur du piston 12, une douille 54 coulisse axialement. Un ressort 58, prenant appui sur le piston 12, repousse la douille 54 vers l'arrière (vers la droite sur les figures).

A l'intérieur de la douille, un distributeur-plongeur 32 coulisse axialement sous la commande d'une tige de commande 28 commandée par une pédale de frein non représentée.

Par ailleurs, une vanne trois voies situées à l'intérieur du piston 12 permet soit de mettre en communication la chambre avant 8 et la chambre arrière 10, soit de mettre la chambre arrière à la pression atmosphérique, soit d'isoler la chambre arrière. Pour cela, comme représenté sur la figure 4, la vanne trois voies comporte un clapet 46 de forme annulaire susceptible d'être en contact soit avec un siège de clapet d'équilibrage 48 porté par une extrémité annulaire de la douille 54, soit avec un siège de clapet d'admission 50 porté par une extrémité annulaire du distributeur-plongeur 32.

La douille 54 est normalement poussée vers l'arrière (vers la droite sur les figures), c'est à dire vers le clapet 46, par un ressort 58 qui prend appui sur un épaulement 60 du piston 12.

Le dispositif de l'invention comporte également une clé 84 qui traverse la douille 54 par des lumières 88, 88'.

Selon l'invention, cette clé comporte une face 100 inclinée par rapport à la direction axiale du servomoteur. De plus, cette clé possède une première extrémité 101 qui s'appuie sur une face avant 121 du piston pneumatique 12 et une deuxième extrémité 102 qui s'appuie sur une partie fixe du servomoteur. En l'occurrence dans le dispositif des figures 3 et 4, la deuxième extrémité 102 s'appuie sur une pièce 90 qui au repos s'appuie sur un épaulement du boîtier du servomoteur.

De plus, l'une des extrémités de la clé peut être fixée par une articulation sur la pièce sur laquelle elle prend appui. Par exemple, sur les figures 3 et 4, l'extrémité 101 de la clé 84 est articulée sur un axe 103 solidaire de la face 121 du piston 12. L'extrémité 102 s'appuie sur la face 91 de la pièce 90 et elle peut donc tourner autour de l'axe 103.

Pour que la face 100 de la clé 84 soit inclinée par rapport à l'axe du servomoteur, la clé 84 a une forme pliée sur les figures 3 et 4, mais cela n'est pas obligatoire; il suffit que l'extrémité 102 prenne appuie sur le boîtier du servomoteur ou sur une pièce (telle que 90) qui est liée au boîtier du servomoteur.

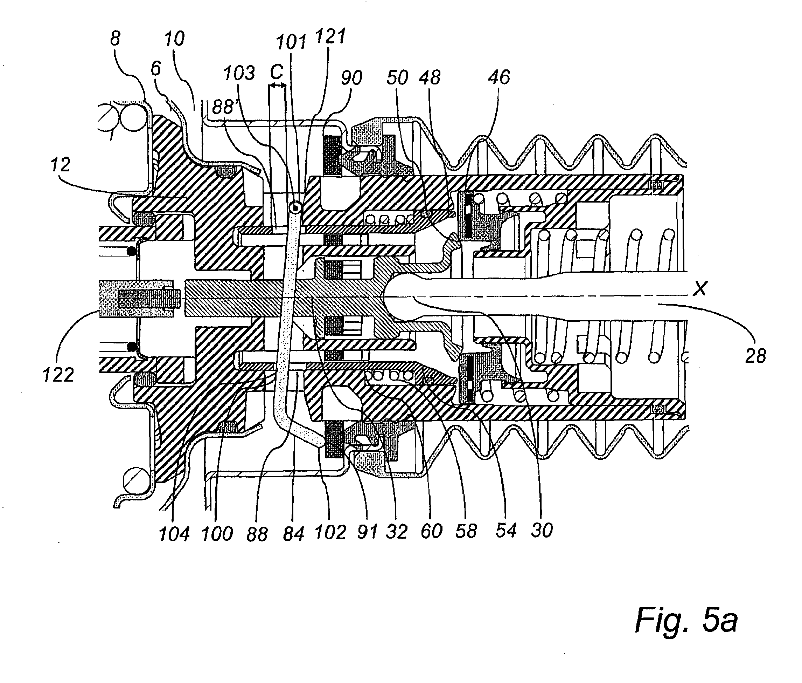

En se reportant à la figure 3 et aux figures 5a à 5d, on va maintenant décrire le fonctionnement du dispositif des figures 3 et 4.

Lorsque le système de freinage est au repos (c'est-à-dire que le conducteur n'appuie pas sur la pédale de frein), le système est tel que représenté par la figure 5a. La douille 54 est repoussée vers l'arrière par le ressort 58 mais le clapet 46 est décollé du siège de clapet d'équilibrage 48 porté par la douille 54. Cet espace entre le clapet 46 et le siège de clapet 48 met en communication la chambre avant 8 et la chambre arrière 10. Le clapet 46 est en appui sur le siège de clapet d'admission 50 et isole ainsi la chambre arrière 10 de la pression atmosphérique.

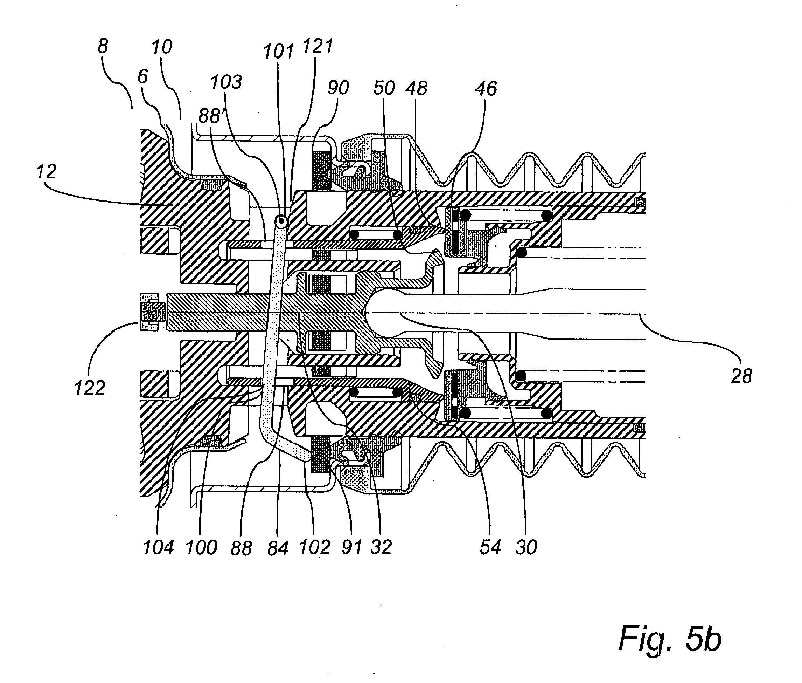

Au début d'une phase de freinage représentée par la figure 5b, lorsque le conducteur appuie sur la pédale de frein, la tige de commande 28 est déplacée axialement vers l'avant (vers la gauche sur les figures), le distributeur-plongeur 32 se déplace vers l'avant. Le siège de clapet 50 se déplace vers l'avant. Le clapet 46 se déplace également vers l'avant et est appliqué sur le siège de clapet d'équilibrage 48 porté par la douille 54. La chambre arrière 10 est isolée de la chambre avant 8. Le distributeur-plongeur se déplaçant vers l'avant, le clapet 46 se décolle du siège de clapet d'admission 50, autorisant une alimentation en air à pression atmosphérique dans la chambre arrière 10.

Du fait de la différence de pressions entre la chambre avant et la chambre arrière, la jupe 6 et le piston 12 sont déplacés vers l'avant. Le siège de clapet d'équilibrage 48 porté par la douille 54 est maintenu plaqué contre le clapet 46 par le ressort 58. Le piston hydraulique du maître-cylindre 122 est poussé par le piston pneumatique 12, et emporte lui-même le piston auxiliaire 126 (voir figure 1) qui s'éloigne du palpeur. Au delà d'une pression déterminée dans le maître-cylindre suffisante pour que le piston auxiliaire 126 puisse vaincre le ressort de saut, le piston auxiliaire 126 est repoussé en direction du distributeur-plongeur 32 jusqu'à venir en contact avec celui-ci et retransmet alors la réaction du circuit hydraulique à la pédale de frein.

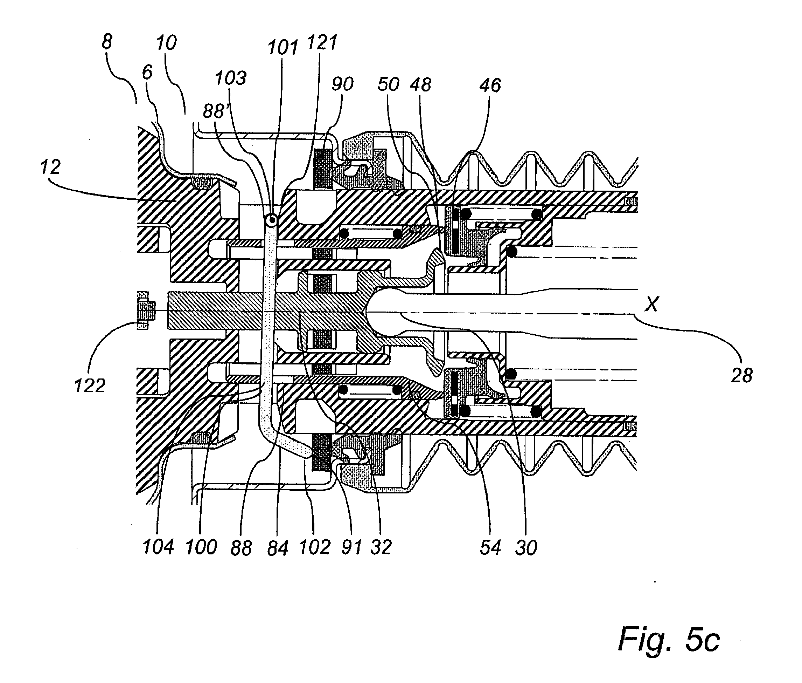

Durant ce fonctionnement, le piston pneumatique 12 en se déplacent vers l'avant, déplace l'axe d'articulation 103 de l'extrémité 101 de la clé 84 (voir figure 5c). La zone 104 de la surface 100 de la clé 84 se déplace vers l'avant moins rapidement que la zone de la clé située du côté de l'articulation 104. Cette zone 104 pousse vers l'avant la douille 54 mais à une vitesse inférieure à la vitesse de déplacement du piston. Par ailleurs le ressort 58 tend à déplacer la douille 54 vers l'arrière. Du fait du déplacement plus rapide du piston vers l'avant et sous l'effet du ressort 58, la douille se déplace vers l'arrière relativement au piston.

La clé 84 pivote autour de l'axe 103 en raison du frein opposé à son déplacement par l'extrémité de gauche de la lumière 88 de la douille 54.

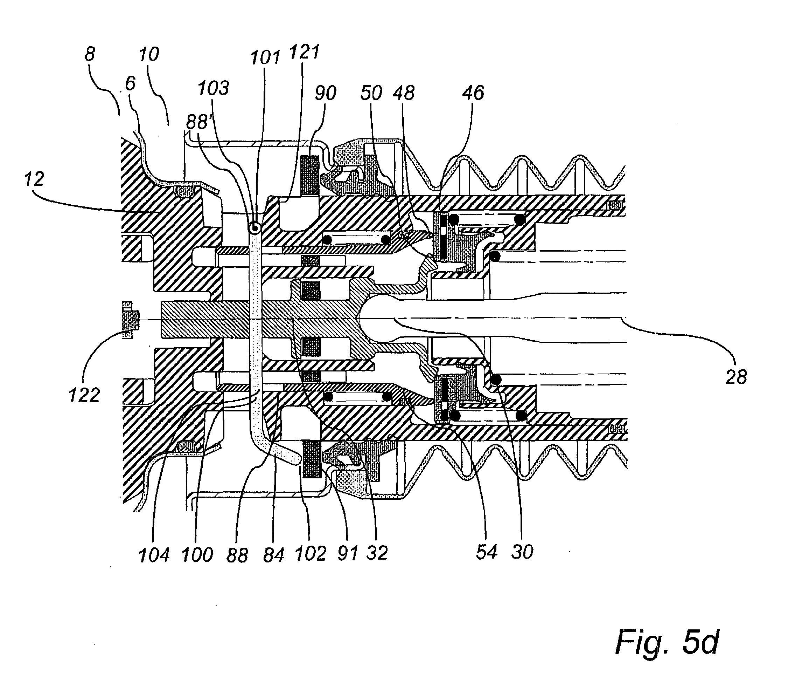

En figure 5d, la face avant 100 de la clé 84 se trouve plaquée aux extrémités avant des lumières 88 et 88' de la douille. La clé 84 est plaquée à la face avant 121 du piston pneumatique 12 et est donc maintenant fixe par rapport au piston. La douille est liée axialement au déplacement du piston.

Le clapet 46 vient en contact avec le siège de clapet d'admission 50 et interrompt l'alimentation en air à pression atmosphérique de la chambre arrière. Le conducteur doit alors enfoncer d'avantage la pédale de frein pour augmenter le niveau de freinage.

Le clapet 46 est alors en contact avec le siège de clapet d'équilibrage 48 de la douille 54 et avec le siège de clapet d'admission 50, interrompant l'alimentation en air à pression atmosphérique de la chambre arrière.

La figure 5d représente le servomoteur en phase où il ne fournit plus d'assistance supplémentaire. L'augmentation de pression dans le maître-cylindre est égale à l'effort supplémentaire fourni par le conducteur par la section du piston du maître-cylindre.

La course C (voir figure 4) représentée par la distance parcourue par la face avant 100 de la clé 84 dans la lumière supérieure 88' de la douille 54 sera de préférence choisie de manière à ce qu'elle corresponde à la course morte du maître-cylindre, c'est-à-dire à la course nécessaire du piston hydraulique dans le maître-cylindre pour obtenir le début de la montée en pression du liquide de frein dans les freins.

Dans ces conditions, non seulement le conducteur ne ressent à la pédale que la course nécessaire à la fermeture du clapet d'équilibrage et à l'ouverture du clapet d'admission et ne ressent pas la course morte du maître-cylindre, mais de plus la transition entre ce fonctionnement et le freinage réel se fait de manière progressive.

Par la suite, lorsque le conducteur relâche la pédale de frein au moins en partie. Le distributeur plongeur 32 est entraîné avec la tige de commande vers l'arrière. Le siège de clapet d'admission 50 vient en contact avec le clapet 46 et emporte le clapet 46 en éloignement du siège d'équilibrage 48, mettant en communication la chambre avant 8 et la chambre arrière 10. Les pressions s'équilibrent alors de part et d'autre de la jupe 6 qui revient en position repos. Le système se retrouve dans l'état représenté en figure 5a.

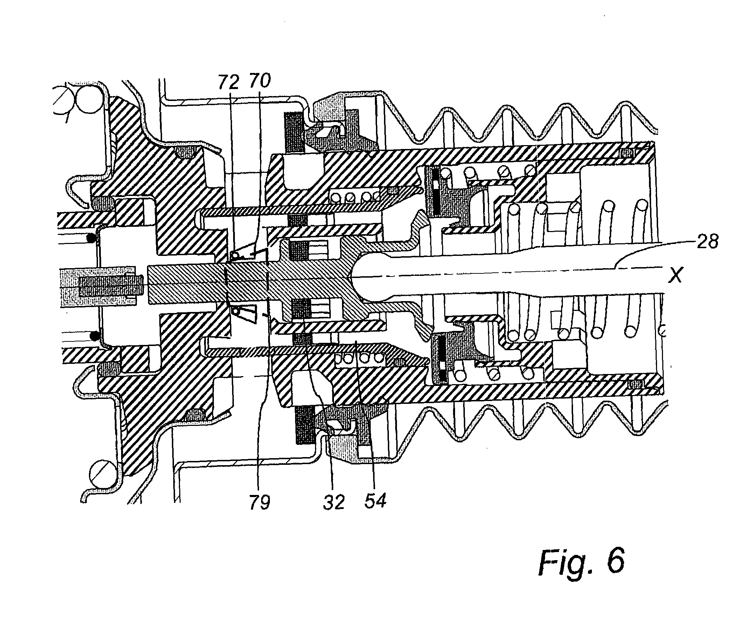

En se reportant au figure 6 à 8c, on va maintenant décrire une variante de réalisation du système de l'invention. Ce système comporte au moins une tige 72 qui traverse la douille 54 orthogonalement à l'axe de la douille.

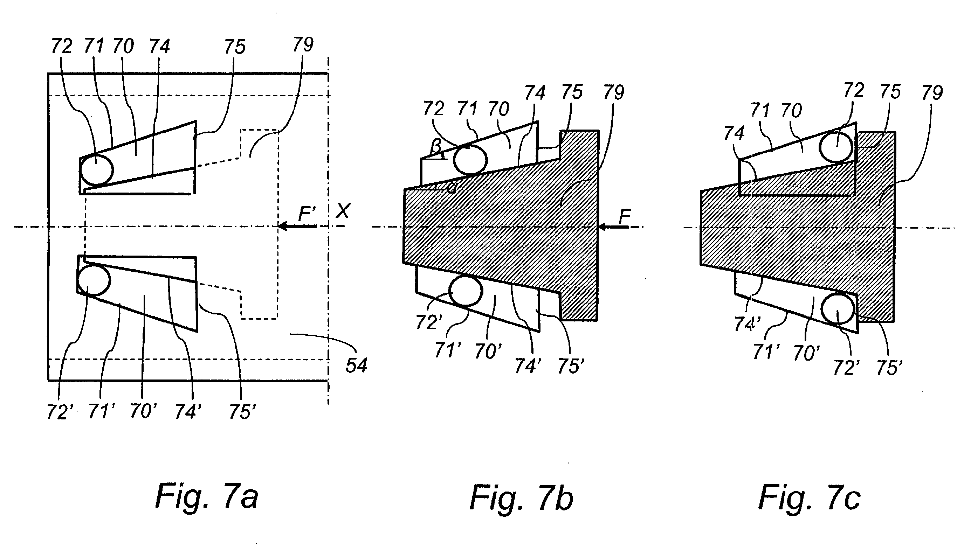

De préférence, pour une question d'équilibrage de la douille, le système comporte deux tiges 72 et 72' disposées symétriquement par rapport à l'axe de la douille. Ces tiges traversent la paroi de la douille par des ouvertures telles que 70 et 70'. Chaque ouverture possède une paroi 71 qui est inclinée par rapport à l'axe de la douille selon un angle β (voir figure 7b).

Par ailleurs, une pièce 79 de forme biseautée peut se déplacer axialement entre les deux tiges 72 et 72'. Les faces biseautées 74 et 74' de la pièce 79 sont inclinées dans le même sens que les faces 71 et 71' par rapport à l'axe de la douille. Leur fonction est d'appliquer les tiges 72 et 72' respectivement contre les faces 71 et 71'. L'angle d'inclinaison α des faces 74 et 74' est inférieur à l'angle β de telle façon qu'en déplaçant la pièce biseautée 79 sous l'effet d'une force indiquée par la flèche F, les tiges 72 et 72' se déplacent en sens inverse de la flèche F. Cette force F est de préférence fournie par le déplacement du piston 12.

Au repos, lorsque le conducteur n'appuie pas sur la pédale de frein, la pièce 79 est dans la position représentée par la figure 7a.

Lorsque le conducteur appuie sur la pédale de frein, le piston 12 se déplace vers l'avant (vers la gauche sur les figures) comme cela a été décrit précédemment. La pièce 79 en se déplaçant vers l'avant force, les tiges 72 et 72' a se déplacer vers l'arrière.

Simultanément, la pièce 79 entraîne progressivement la douille 54 vers l'avant ce qui commande l'ouverture progressive du clapet 48-46.

Le système passe par la situation représentée par la figure 7b jusqu'à ce que les tiges arrivent en contact avec les faces 75 et 75' des ouvertures 70 et 70' (voir figure 7c).

Lorsque les tiges 72 et 72' sont en contact avec les faces 75 et 75', la pièce 79 couple quasi-directement le piston à la douille qui va suivre dès lors les mêmes déplacement que le piston.

Les angles d'inclinaison α et β sont calculées de façon à ce que les tiges 72 et 72' offrent une résistance au déplacement de la pièce biseautée 79. Ainsi durant le déplacement de la pièce 79, la douille 54 aura tendance à être entraînée progressivement vers l'avant.

Dans le cadre de l'invention, les frottements entre les tiges 72 et 72' et les faces 71, 71', 74, 74' sont optimisés pour obtenir un entraînement progressif de la douille.

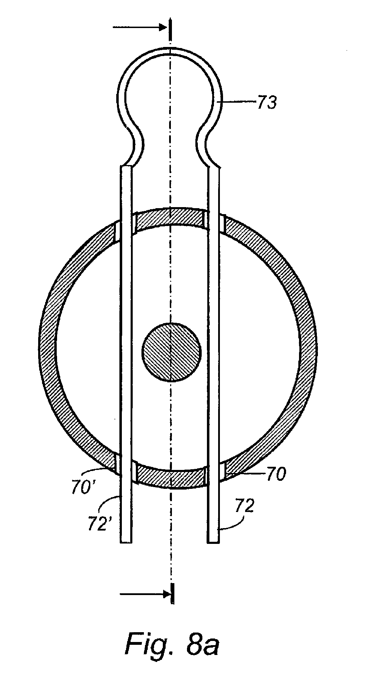

Comme cela est représenté sur la figure 8a, les tiges 72 et 72' sont espacées l'une de l'autre pour être situées de part et d'autre du distributeur-plongeur 32. Elles peuvent être faites en une seule pièce. Par exemple, elles peuvent être reliées par un élément ressort 73 pour que les deux tiges aient tendance à se rapprocher l'une de l'autre.

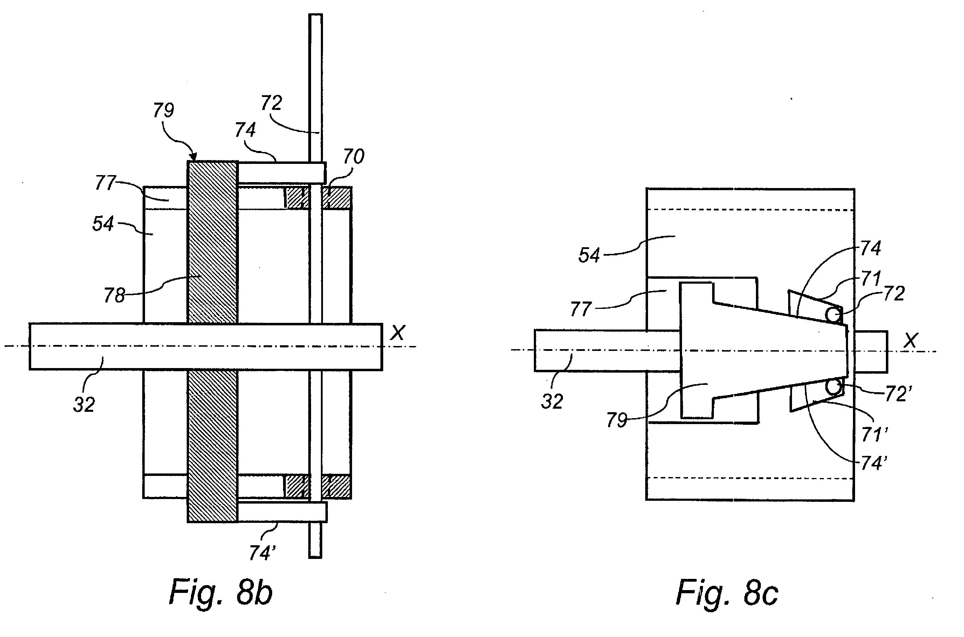

Sur les figures 8b et 8c, la pièce 79 possède deux parties biseautées 74 et 74' situées de part et d'autre de la douille 54. Les tiges 72 et 72' sont écartées l'une de l'autre tout en restant parallèles lorsque les parties biseautées 74 et 74' sont poussées vers l'avant par le piston.

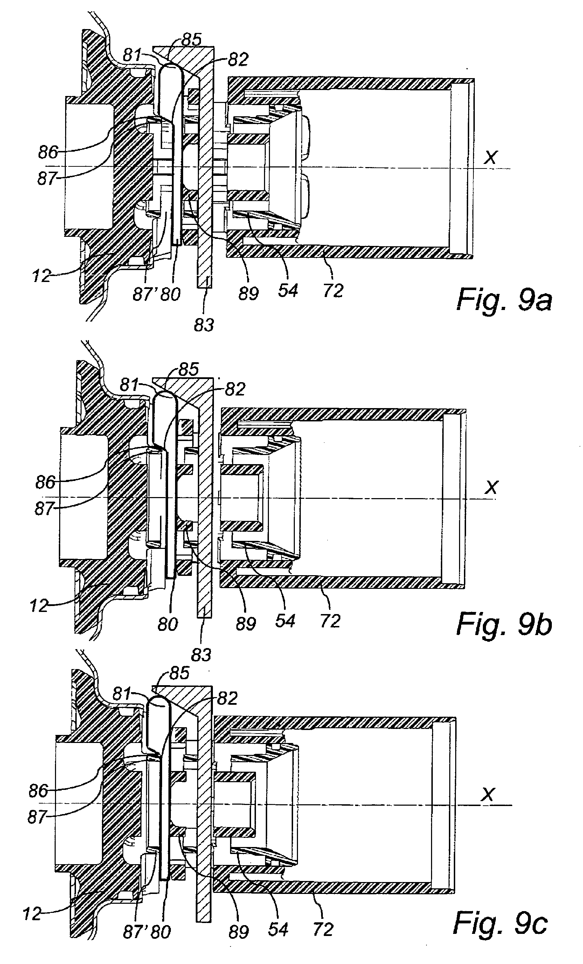

Les figures 9a à 9c représentent une variante de réalisation du système de l'invention.

Une clé 80 traverse de part en part la douille 54 à travers des ouvertures 87 et 87'. La clé 80 possède une face inclinée 82 par rapport à l'axe de la douille. Cette face 82 est située à proximité d'un bord 86 d'une des ouvertures telle que 87.

Par ailleurs, la partie supérieure 81 de la clé 80 est en appui sur une face inclinée 85 d'une pièce d'appui 83. En position de repos, la pièce 83 est en appui sur le couvercle 27 du boîtier 2 du servomoteur (figure 1). La face 85 est préférentiellement parallèle ou sensiblement parallèle à la face 82.

Lors d'une commande de freinage, telle que décrite précédemment, le piston 12 se déplace vers l'avant (vers la gauche). La pièce 89 appartenant au piston pousse vers l'avant la clé 80. La face inclinée 82 de la clé glisse sur le bord 86 de l'ouverture 87. Pour pouvoir se déplacer vers l'avant, la clé monte verticalement (sur la figure 9a) et frotte sur la face inclinée 85. Ce déplacement est représenté sur la figure 9b.

Selon une forme de réalisation préférée de l'invention, la partie supérieure 81 de la clé, qui est en contact avec la face inclinée 85, est de forme arrondie ou sphérique.

Lors du déplacement du piston, le déplacement de la clé entraîne le déplacement de la douille 54 mais à une vitesse moindre que la vitesse de déplacement du piston en raison du frottement de l'extrémité 81 de la clé sur la face 85 et du frottement de la face 82 sur l'extrémité 86 de l'ouverture 87. La clé arrive ensuite en butée (figure 9c) contre l'extrémité avant de l'ouverture 87 et la douille 54 est entraînée vers l'avant sans quasiment de frottement par le piston.

Cette variante de réalisation a donc permis d'obtenir un déplacement progressif de la douille 54 lors du déplacement du piston du servomoteur.

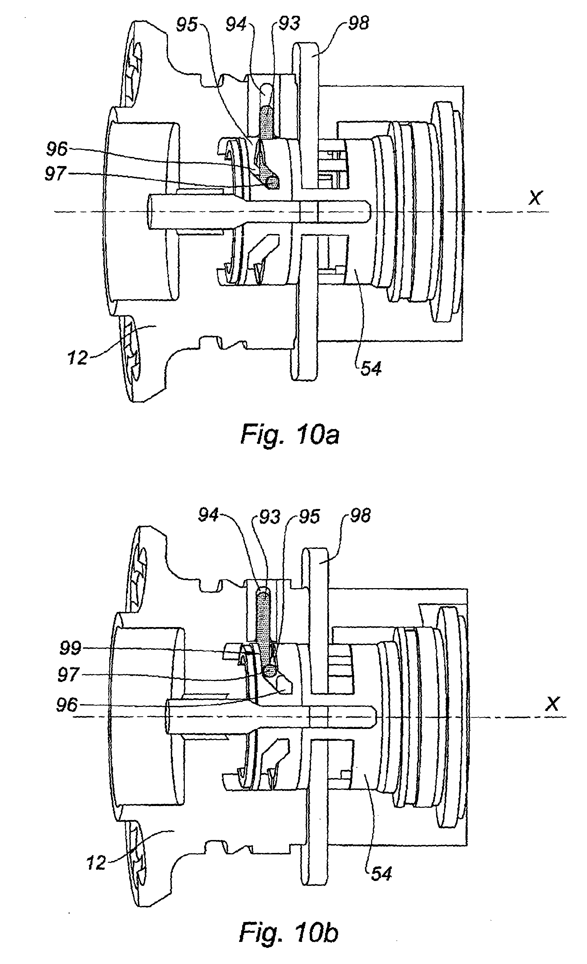

Les figures 10a et 10b représentent une autre variante de réalisation du système de l'invention.

Selon cette variante, la paroi de la douille 54 comporte au moins une fenêtre 96 dont des parois de guidage sont inclinées par rapport à l'axe longitudinal X de la douille. Un maneton 99 possède une première extrémité 97 qui peut se déplacer entre les parois de guidage de cette fenêtre 96. Le maneton possède en outre une deuxième extrémité 93 qui peut coulisser dans une cavité 94 du piston ou d'une pièce solidaire du piston.

Par ailleurs, la douille 54 a la faculté de tourner autour de son axe, lors de son déplacement axial pour permettre à la première extrémité 97 du maneton de se déplacer dans la fenêtre 96.

La figure 10a représente ce système à l'état de repos.

Lorsqu'une commande de freinage est actionnée, le piston est entraîné vers l'avant comme cela a été décrit précédemment.

Le piston entraîne le maneton 99 lequel tend à entraîner la douille par son extrémité 97. Cependant, celle-ci se déplace entre les parois de guidage de la fenêtre 96. En raison de l'inclinaison des parois de guidage par rapport à l'axe longitudinal X, un déplacement moins rapide de la douille par rapport à la vitesse de déplacement du piston est obtenu. Comme dans les formes de réalisation précédentes, on obtient donc un déplacement progressif de la douille.

On notera que lors du déplacement de l'extrémité 97, l'extrémité 93 du maneton coulisse dans la cavité 94 du piston.

Ce fonctionnement se poursuit jusqu'à ce que l'extrémité 97 arrive dans la position représentée par la figure 10b. Le piston agit alors directement sur le déplacement de la douille 54.

On voit donc, à partir des différents modes de réalisation ainsi décrits, que l'invention permet un déplacement progressif de la douille 54 lorsque le piston se déplace. Cela permet d'améliorer la sensation ressentie à la pédale de frein durant phase de début de freinage.

## Revendications

1. Servomoteur d'assistance au freinage comportant:
- un boîtier (2) d'axe longitudinal (X)
- un ensemble jupe (6) et piston pneumatique (12) monté à coulissement étanche dans le boîtier (2) selon l'axe longitudinal (X), ledit ensemble jupe et piston (6,12) divisant l'espace intérieur (4) du boîtier (2) en une chambre avant à basse pression (8) et en une chambre arrière à pression variable (10),
- une vanne trois voies (26) actionnée par une tige de commande (28) montée dans un passage longitudinal (34) percé dans le piston pneumatique (12), ladite tige de commande (28) étant reliée par une première extrémité longitudinale à une pédale de frein,
- un distributeur-plongeur (32) mobile, dans ledit piston, selon ledit axe longitudinal (X) sous la commande d'une deuxième extrémité de ladite tige de commande (28), , ledit distributeur plongeur (32) comportant un palpeur d'application de l'effort de la tige de commande (28) à un piston hydraulique (122) d'un maître-cylindre par l'intermédiaire d'un dispositif de réaction, ledit ensemble jupe et piston (6,12) transmettant un effort d'assistance pneumatique au piston hydraulique (122) du maître-cylindre,
- une douille (54) montée à coulissement étanche dans le piston pneumatique (12) selon ledit axe longitudinal (X) sur une première course déterminée (C),
- un moyen de solidarisation apte à lier axialement ladite douille (54) au piston pneumatique (12) lorsque ledit piston pneumatique a parcouru la course déterminée (C),
ladite vanne trois voies (26) comportant un premier (48) et un deuxième (50) siège de clapet, ainsi qu'un clapet (46) destiné à être appliqué contre le premier et/ou le deuxième siège de clapet (48, 50), ledit deuxième siège de clapet (50) étant porté par une première extrémité longitudinale du distributeur-plongeur (32), le premier siège de clapet étant porté par une première extrémité longitudinale de ladite douille (54), **caractérisé en ce que** le moyen de solidarisation comporte un dispositif de déplacement progressif de la douille en fonction du déplacement du piston.

2. Servomoteur d'assistance au freinage selon la revendication 1, **caractérisé en ce que** le dispositif de déplacement progressif comporte une face (100, 71, 71', 82, 82') inclinée par rapport audit axe longitudinal (X) et destinée à transmettre à ladite douille (54), un effort de déplacement selon l'axe longitudinal (X) fourni par le piston (12).

3. Servomoteur d'assistance au freinage selon la revendication 2, **caractérisé en ce que** ladite face inclinée (100) appartient à une face avant d'une clé (84) possédant une première extrémité (101) qui s'appuie sur une pièce solidaire du piston (12) ou sur le piston lui-même, et une deuxième extrémité (102) qui s'appuie sur le boîtier du servomoteur ou sur une pièce qui est elle-même en appui sur le boîtier du servomoteur.

4. Servomoteur d'assistance au freinage selon la revendication 3, **caractérisé en ce que** la première extrémité ou la deuxième extrémité (101 ou 102) de la clé (84) est fixée par une articulation (103) à la pièce sur laquelle elle est en appui.

5. Servomoteur d'assistance au freinage selon la revendication 4, **caractérisé en ce que** la première extrémité (101) est fixée au piston par ladite articulation (103) et **en ce que** la deuxième extrémité (102) possède une partie courbée qui prend appui sur le boîtier du servomoteur ou sur une pièce (90) qui est elle-même en appui sur le boîtier du servomoteur.

6. Servomoteur d'assistance au freinage selon l'une des revendications précédentes, **caractérisé en ce que** la clé (84) traverse les parois de la douille (54) transversalement audit axe (X) par des lumières (88, 88'), la face inclinée (100) de la clé (84) étant destinée à s'appuyer sur des extrémités avant des lumières de la douille.

7. Servomoteur d'assistance au freinage selon la revendication 6, **caractérisé en ce qu'**en situation de freinage, la face inclinée (100) de la clé (84) appuie sur les extrémités avant des deux lumières (88, 88') de la douille.

8. Servomoteur d'assistance au freinage selon la revendication 3, **caractérisé en ce qu'**il comporte au moins une tige (72, 72') qui traverse, orthogonalement audit axe longitudinal (X), les parois de la douille à travers des ouvertures (70, 70') dont une paroi (71, 71') au moins est inclinée par rapport audit axe longitudinal (X), des moyens de commande (79) permettant de commander le déplacement longitudinal le long de la paroi inclinée (71, 71') de la tige et de transmettre un mouvement de déplacement axial du piston (12) à la douille par l'intermédiaire de ladite tige (72, 72').

9. Servomoteur d'assistance au freinage selon la revendication 8, **caractérisé en ce que** ledit moyen de commande comporte une pièce biseautée (79) comportant au moins une face inclinée (74, 74') par rapport audit axe longitudinal (X) dans le même sens que les parois inclinées (71, 71') des ouvertures de la douille.

10. Servomoteur d'assistance au freinage selon la revendication 9, **caractérisé en ce que** les parois inclinées des ouvertures de la douille forment un premier angle (α) avec l'axe longitudinal (X), la face inclinée de la pièce biseautée (79) forme un deuxième angle (β) avec l'axe longitudinal, et **en ce que** le premier angle (α) est supérieur au deuxième angle (β).

11. Servomoteur d'assistance au freinage selon la revendication 10, **caractérisé en ce qu'**il comporte deux tiges (72, 72') parallèles et symétriques l'une de l'autre par rapport à l'axe longitudinal (X), la pièce biseautée (79) ayant une forme symétrique par rapport audit axe (X).

12. Servomoteur d'assistance au freinage selon la revendication 11, **caractérisé en ce que** les deux tiges (72, 72') sont en une seule pièce et sont reliées entre elles par une jonction ressort (73).

13. Servomoteur d'assistance au freinage selon la revendication 3, **caractérisé en ce qu'**il comporte une clé (80) qui traverse transversalement la douille (54) par des fenêtres (87, 87') et qui comporte une face (82) inclinée par rapport audit axe longitudinal (X), ladite face inclinée s'appuyant sur des extrémités avant (82) desdites fenêtres (87, 87'), un mouvement axial de ladite clé (80), commandé par le mouvement du piston, induisant un mouvement transversal de la clé.

14. Servomoteur d'assistance au freinage selon la revendication 13, **caractérisé en ce qu'**il comporte une pièce d'appui (83) comportant une face inclinée (85) sur laquelle une extrémité 81 de la clé prend appui.

15. Servomoteur d'assistance au freinage selon la revendication 14, **caractérisé en ce que** la face inclinée (85) de la pièce d'appui (83) est sensiblement parallèle à la face inclinée (82) de ladite clé (83).

16. Servomoteur d'assistance au freinage selon la revendication 3, **caractérisé en ce que** la douille (54) comporte une fenêtre (96) inclinée par rapport audit axe longitudinal (X) ainsi qu'un maneton 99 dont une première extrémité (97) peut se déplacer dans cette fenêtre et une deuxième extrémité (93) peut coulisser dans une cavité du piston (12).

17. Servomoteur d'assistance au freinage selon la revendication 16, **caractérisé en ce que** la douille (54) est mobile en rotation pour permettre le coulissement de la première extrémité (97) du maneton (99) dans la fenêtre (96).

## Claims

1. Brake booster comprising:
- a casing (2) of longitudinal axis (X),
- an assembly comprising a skirt (6) and a pneumatic piston (12) which is mounted to slide in a leaktight manner in the casing (2) along the longitudinal axis (X), said skirt-and-piston assembly (6, 12) dividing the interior space (4) of the casing (2) into a low-pressure front chamber (8) and a variable-pressure rear chamber (10),
- a three-way valve (26) actuated by a control rod (28) mounted in a longitudinal passage (34) pierced in the pneumatic piston (12), the said control rod (28) being connected via a first longitudinal end to a brake pedal,
- a distributor-plunger (32) that can move, in the said piston, along the said longitudinal axis (X) under the control of a second end of the said control rod (28), the said distributor-plunger (32) comprising a sensor for applying the force of the control rod (28) to a hydraulic piston (122) of a master cylinder via a reaction device, the said skirt-and-piston assembly (6, 12) transmitting a pneumatic boost force to the hydraulic piston (122) of the master cylinder,
- a sleeve (54) mounted to slide in a leaktight manner in the pneumatic piston (12) along the said longitudinal axis (X) over a set first travel (C),
- a securing means capable axially of connecting the said sleeve (54) to the pneumatic piston (12) when the said pneumatic piston has covered the set travel (C),
the said three-way valve (26) comprising a first valve seat (48) and a second valve seat (50) and a valve shutter (46) intended to be pressed against the first and/or second valve seat (48, 50), the said second valve seat (50) being borne by a first longitudinal end of the distributor-plunger (32), the first valve seat being borne by a first longitudinal end of the said sleeve (54), **characterized in that** the securing means comprises a device for gradually moving the sleeve according to the movement of the piston.

2. Brake booster according to Claim 1, **characterized in that** the gradual movement device comprises a face (100, 71, 71', 82, 82') that is inclined with respect to the said longitudinal axis (X) and it is intended to transmit to the said sleeve (54) a movement force along the longitudinal axis (X) as supplied by the piston (12).

3. Brake booster according to Claim 2, **characterized in that** the said inclined face (100) belongs to a front face of a key (84) that has a first end (101) which rests against a part secured to the piston (12) or against the piston itself, and a second end (102) which rests against the casing of the booster or against a part which itself rests against the casing of the booster.

4. Brake booster according to Claim 3, **characterized in that** the first end or the second end (101) or (102) of the key (84) is fixed by an articulation (103) to the part against which it rests.

5. Brake booster according to Claim 4, **characterized in that** the first end (101) is fixed to the piston by the said articulation (103) and **in that** the second end (102) has a curved portion which rests against the casing of the booster or against a part (90) which itself rests against the casing of the booster.

6. Brake booster according to one of the preceding claims, **characterized in that** the key (84) passes through the walls of the sleeve (54) transversely to the said axis (X) via slots (88, 88'), the inclined face (100) of the key (84) being intended to rest against front ends of the slots of the sleeve.

7. Brake booster according to Claim 6, **characterized in that**, under braking, the inclined face (100) of the key (84) rests against the front ends of the two slots (88, 88') of the sleeve.

8. Brake booster according to Claim 3, **characterized in that** it comprises at least one rod (72, 72') which passes at right angles to the said longitudinal axis (X) through the walls of the sleeve via openings (70, 70') of which at least one wall (71, 71') is inclined with respect to the said longitudinal axis (X), control means (79) controlling the longitudinal movement along the inclined wall (71, 71') of the rod and allowing an axial movement of the piston (12) to be transmitted to the sleeve via the said rod (72, 72').

9. Brake booster according to Claim 8, **characterized in that** the said control means comprises a mitered part (79) that has at least one face (74, 74') that is inclined with respect to the said longitudinal axis (X) in the same direction as the inclined walls (71, 71') of the openings in the sleeve.

10. Brake booster according to Claim 9, **characterized in that** the inclined walls of the openings in the sleeve make a first angle (α) with the longitudinal axis (x), the inclined face of the mitered part (79) makes a second angle (β) with the longitudinal axis, and **in that** the first angle (α) is greater than the second angle (β).

11. Brake booster according to Claim 10, **characterized in that** it comprises two rods (72, 72') that are parallel and symmetric with one another with respect to the longitudinal axis (X), the mitered part (79) having a shape that is symmetric about the said axis (X).

12. Brake booster according to Claim 11, **characterized in that** the two rods (72, 72') are made as a single piece and are joined together by a spring joint (73).

13. Brake booster according to Claim 3, **characterized in that** it comprises a key (80) which passes transversely through the sleeve (54) via apertures (87, 87') and which has a face (82) that is inclined with respect to the said longitudinal axis (X), the said inclined phase resting against front ends (82) of the said apertures (87, 87'), an axial movement of the said key (80), brought about by the movement of the piston, causing the key to move transversely.

14. Brake booster according to Claim 13, **characterized in that** it comprises a bearing part (83) that has an inclined face (85) against which one end (81) of the key rests.

15. Brake booster according to Claim 14, **characterized in that** the inclined face (85) of the bearing part (83) is substantially parallel to the inclined face (82) of the said key (83).

16. Brake booster according to Claim 3, **characterized in that** the sleeve (54) has an aperture (96) that is inclined with respect to the said longitudinal axis (X) and a pin (99) a first end (97) of which can move in this aperture and a second end (93) of which can slide in a cavity of the piston (12).

17. Brake booster according to Claim 16, **characterized in that** the sleeve (54) is able to rotate in order to allow the first end (97) of the pin (99) to slide in the aperture (96).

## Patentansprüche

1. Servomotor zur Bremsunterstützung, mit:
- einem Gehäuse (2) mit einer Längsachse (X),
- einer aus einer Schürze (6) und einem pneumatischen Kolben (12) bestehenden Baugruppe, die so angebracht ist, dass sie in dichter Weise entlang der Längsachse (X) in dem Gehäuse (2) gleitet, wobei die aus Schürze und Kolben (6, 12) bestehende Baugruppe den Innenraum (4) des Gehäuses (2) in eine vordere Kammer (8) mit niedrigem Druck und eine hintere Kammer (10) mit variablem Druck unterteilt,
- einem Dreiwegeventil (26), das von einer Steuerstange (28) betätigt wird, die in einem im pneumatischen Kolben (12) ausgebildeten Längsdurchgang (34) angebracht ist, wobei die Steuerstange (28) über ein erstes Längsende mit einem Bremspedal verbunden ist,
- einem Verteilertauchkolben (32), der durch eine Betätigung durch ein zweites Ende der Steuerstange (28) im Kolben entlang der Längsachse (X) beweglich ist, wobei der Verteilertauchkolben (32) einen Taster zum Aufbringen der Kraft der Steuerstange (28) auf einen hydraulischen Kolben (122) eines Hauptzylinders mittels einer Reaktionsvorrichtung aufweist, wobei die aus Schürze und Kolben (6, 12) bestehende Baugruppe eine pneumatische Unterstützungskraft zum hydraulischen Kolben (122) des Hauptzylinders überträgt,
- einer Hülse (54), die so angebracht ist, dass sie über einen ersten vorbestimmten Weg (C) entlang der Längsachse (X) in dichter Weise im pneumatischen Kolben (12) gleitet,
- einem Verbindungsmittel, das die Hülse (54) axial mit dem pneumatischen Kolben (12) verbinden kann, wenn der pneumatische Kolben den vorbestimmten Weg (C) zurückgelegt hat,
wobei das Dreiwegeventil (26) einen ersten (48) und einen zweiten Ventilelementsitz (50) und ein Ventilelement (46) aufweist, das dazu vorgesehen ist, an den ersten und/oder den zweiten Ventilelementsitz (48, 50) in Anlage gebracht zu werden, wobei der zweite Ventilelementsitz (50) an einem ersten Längsende des Verteilertauchkolbens (32) vorgesehen ist und der erste Ventilelementsitz an einem ersten Längsende der Hülse (54) vorgesehen ist, **dadurch gekennzeichnet, dass** das Verbindungsmittel eine Vorrichtung zur progressiven Verlagerung der Hülse in Abhängigkeit von der Verlagerung des Kolbens aufweist.

2. Servomotor zur Bremsunterstützung nach Anspruch 1, **dadurch gekennzeichnet, dass** die Vorrichtung zur progressiven Verlagerung eine Fläche (100, 71, 71', 82, 82') aufweist, die in Bezug auf die Längsachse (X) geneigt und dazu vorgesehen ist, eine von dem Kolben (12) bereitgestellte Kraft zur Verlagerung entlang der Längsachse (X) zur Hülse (54) zu übertragen.

3. Servomotor zur Bremsunterstützung nach Anspruch 2, **dadurch gekennzeichnet, dass** die geneigte Fläche (100) zu einer vorderen Fläche eines Schlüssels (84) gehört, der ein erstes Ende (101) aufweist, das sich an einem mit dem Kolben (12) fest verbundenen Teil oder am Kolben selbst abstützt, sowie ein zweites Ende (102), das sich am Gehäuse des Servomotors oder an einem Teil abstützt, das selbst am Gehäuse des Servomotors anliegt.

4. Servomotor zur Bremsunterstützung nach Anspruch 3, **dadurch gekennzeichnet, dass** das erste Ende oder das zweite Ende (101 oder 102) des Schlüssels (84) über ein Gelenk (103) an dem Teil befestigt ist, an dem es anliegt.

5. Servomotor zur Bremsunterstützung nach Anspruch 4, **dadurch gekennzeichnet, dass** das erste Ende (101) über das Gelenk (103) am Kolben befestigt ist und das zweite Ende (102) einen gebogenen Abschnitt aufweist, der sich am Gehäuse des Servomotors oder an einem Teil (90) abstützt, das selbst am Gehäuse des Servomotors anliegt.

6. Servomotor zur Bremsunterstützung nach einem der vorhergehenden Ansprüche, **dadurch gekennzeichnet, dass** der Schlüssel (84) durch Schlitze (88, 88') die Wände der Hülse (54) quer zur Achse (X) durchquert, wobei die geneigte Fläche (100) des Schlüssels (84) dazu vorgesehen ist, sich an vorderen Enden der Schlitze der Hülse abzustützen.

7. Servomotor zur Bremsunterstützung nach Anspruch 6, **dadurch gekennzeichnet, dass** bei einer Bremssituation die geneigte Fläche (100) des Schlüssels (84) auf die vorderen Enden der beiden Schlitze (88, 88') der Hülse drückt.

8. Servomotor zur Bremsunterstützung nach Anspruch 3, **dadurch gekennzeichnet, dass** er mindestens eine Stange (72, 72') aufweist, die orthogonal zur Längsachse (X) durch Öffnungen (70, 70') die Wände der Hülse durchquert, wobei mindestens eine Wand (71, 71') in Bezug auf die Längsachse (X) geneigt ist und Steuermittel (79) die Steuerung der Längsverlagerung der Stange entlang der geneigten Wand (71, 71') und die Übertragung einer axialen Verlagerungsbewegung des Kolbens (12) zur Hülse mittels der Stange (72, 72') ermöglichen.

9. Servomotor zur Bremsunterstützung nach Anspruch 8, **dadurch gekennzeichnet, dass** das Steuermittel ein abgeschrägtes Teil (79) mit mindestens einer Fläche (74, 74') aufweist, die in Bezug auf die Längsachse (X) in die gleiche Richtung wie die geneigten Wände (71, 71') der Öffnungen der Hülse geneigt ist.

10. Servomotor zur Bremsunterstützung nach Anspruch 9, **dadurch gekennzeichnet, dass** die geneigten Wände der Öffnungen der Hülse einen ersten Winkel (α) mit der Längsachse (X) bilden, die geneigte Fläche des abgeschrägten Teils (79) einen zweiten Winkel (β) mit der Längsachse bildet und der erste Winkel (α) größer ist als der zweite Winkel (β).

11. Servomotor zur Bremsunterstützung nach Anspruch 10, **dadurch gekennzeichnet, dass** er zwei Stangen (72, 72') aufweist, die in Bezug auf die Längsachse (X) zueinander parallel und symmetrisch sind, wobei das abgeschrägte Teil (79) eine in Bezug auf die Achse (X) symmetrische Form besitzt.

12. Servomotor zur Bremsunterstützung nach Anspruch 11, **dadurch gekennzeichnet, dass** die beiden Stangen (72, 72') einstückig und über eine Federverbindung (73) miteinander verbunden sind.

13. Servomotor zur Bremsunterstützung nach Anspruch 3, **dadurch gekennzeichnet, dass** er einen Schlüssel (80) aufweist, der die Hülse (54) durch Schlitzlöcher (87, 87') in Querrichtung durchquert und eine in Bezug auf die Längsachse (X) geneigte Fläche (82) aufweist, wobei sich die geneigte Fläche an vorderen Enden (82) der Schlitzlöcher (87, 87') abstützt und eine axiale Bewegung des Schlüssels (80), die von der Bewegung des Kolbens gesteuert wird, eine Querbewegung des Schlüssels bewirkt.

14. Servomotor zur Bremsunterstützung nach Anspruch 13, **dadurch gekennzeichnet, dass** er ein Anlageteil (83) mit einer geneigten Fläche (85) aufweist, an der sich ein Ende (81) des Schlüssels abstützt.

15. Servomotor zur Bremsunterstützung nach Anspruch 14, **dadurch gekennzeichnet, dass** die geneigte Fläche (85) des Anlageteils (83) im Wesentlichen parallel zur geneigten Fläche (82) des Schlüssels (83) verläuft.

16. Servomotor zur Bremsunterstützung nach Anspruch 3, **dadurch gekennzeichnet, dass** die Hülse (54) ein in Bezug auf die Längsachse (X) geneigtes Schlitzloch (96) und einen Zapfen (99) aufweist, bei dem sich ein erstes Ende (97) in diesem Schlitzloch verlagern kann und ein zweites Ende (93) in einer Vertiefung des Kolbens (12) gleiten kann.

17. Servomotor zur Bremsunterstützung nach Anspruch 16, **dadurch gekennzeichnet, dass** die Hülse (54) drehbar ist, so dass sie das Gleiten des ersten Endes (97) des Zapfens (99) in dem Schlitzloch (96) ermöglicht.
